# EUROPEAN PATENT SPECIFICATION

(11) **EP 1 877 709 B1**
(45) Date of publication and mention of the grant of the patent: **16.10.2013**
(21) Application number: 05749546.7
(22) Date of filing: 04.05.2005
(51) Int. Cl.: F25B 1/00, F25B 49/00

(54) **REFRIGERANT SYSTEM WITH VARIABLE SPEED SCROLL COMPRESSOR AND ECONOMIZER CIRCUIT**
KÄLTEMITTELSYSTEM MIT EINEM SPIRALVERDICHTER MIT VERSTELLBARER DREHZAHL UND EKONOMISER-KREISLAUF
SYSTEME REFRIGERANT COMPRENANT UN COMPRESSEUR A SPIRALE A VITESSE VARIABLE ET UN CIRCUIT ECONOMISEUR

(43) Date of publication of application: 16.01.2008
(73) Proprietor: Carrier Corporation, Farmington, CT 06434 (US)
(72) Inventor: LIFSON, Alexander, Manlius, NY 13104 (US); TARAS, Michael F., Fayetteville, NY 13066 (US)
(74) Representative: Leckey, David Herbert
(86) International application number: PCT/US2005/015481
(87) International publication number: WO 2006/118573

(56) References cited:
- WO-A1-02/090844
- JP-A- 2002 107 027
- US-A- 4 787 211
- US-A- 5 927 088
- US-A1- 2003 000 237
- US-A1- 2003 000 237
- US-A1- 2005 086 957

## Description

### BACKGROUND OF THE INVENTION

This invention relates to a variable speed scroll compressor that is operable in a refrigerant system with an economizer function and other means of capacity modulation.

Refrigerant systems are utilized in many applications to condition an environment. In particular, air conditioners and heat pumps are employed to cool and/or heat a secondary fluid such as air entering an environment. The cooling or heating load of the environment may vary with ambient conditions, occupancy level, other changes in sensible and latent load demands, and as the temperature and/or humidity set points are adjusted by an occupant of the building.

Thus, refrigerant systems can be provided with sophisticated controls, and a number of optional components and features to adjust cooling and/or heating capacity. Known options include the ability to bypass refrigerant which has been at least partially compressed by a compressor back to a suction line. This function is also known as an unloader function. This additional step of operation is taken to reduce system cooling capacity.

Other options include a so-called economizer cycle. In an economizer cycle, a refrigerant heading to an evaporator is subcooled in an economizer heat exchanger. The refrigerant is subcooled by a tapped refrigerant that is expanded and then passed through the economizer heat exchanger to subcool a main refrigerant. This tapped refrigerant is then returned to an intermediate point in the compression cycle. Thus, the economizer cycle provides a step in operation to vary system capacity by switching between economized and other modes or steps of operation.

In the prior art, controls can be programmed to optionally actuate any one of these various functions. However, the capacity provided by these functions is increased or decreased in steps. It would be desirable to provide the ability to vary the capacity while the system is operating during any of the above described steps (modes) of operation in a continuous fashion in order to exactly match external load demands.

Variable speed drives are known for driving compressors at a variable speed in a refrigerant system. By driving the compressor at a higher or lower speed, the amount of refrigerant that is compressed and circulated throughout the system changes, and thus the system capacity can be changed accordingly.

One increasingly popular type of compressors is a scroll compressor. In a scroll compressor, a pair of scroll members orbit relative to each other to compress an entrapped refrigerant. One design configuration of a scroll compressor utilizes both economizer and unloader functions. Further, this scroll compressor may employ a single port to provide both functions alternatively or simultaneously. This scroll compressor is disclosed in United States Patent Application 5,996,364. However, this type of scroll compressor has not been utilized in combination with a variable speed drive for its motor. See as well US 2005/086957 A1.

WO 02/090844 A1 and US 2003/0000237 A1 disclose refrigeration systems, each of which includes a two-stage multi-cylinder reciprocating compressor driven by a variable frequency motor. The systems further comprise an economiser circuit. A controller adjusts the system to provide suitable cooling depending on the load.

### SUMMARY OF THE INVENTION

According to a first aspect of the present invention, there is provided a refrigerant system comprising: at least one scroll compressor having a variable speed drive for varying a speed of said scroll compressor, and said scroll compressor being provided with a suction port, an intermediate pressure port and discharge port; a condenser downstream of said scroll compressor and an evaporator downstream of said condenser, with an economizer heat exchanger intermediate to said condenser and said evaporator, said economizer heat exchanger selectively returning a tapped refrigerant to said scroll compressor; at least one condenser fan for moving air across said condenser and at least one evaporator fan for moving air across said evaporator; a bypass port configured to selectively bypass refrigerant from said scroll compressor back to a suction line for said scroll compressor; and a control configured to selectively operate said economizer heat exchanger to deliver a tapped refrigerant through said economizer heat exchanger, and back to said compressor, and said control also being operable to vary said speed of said scroll compressor to achieve levels of capacity between a level of capacity with said economizer heat exchanger being operational, and a level of capacity without said economizer heat exchanger being operational, and to provide levels of capacity between a level of capacity provided when said bypass operation is actuated, and without said bypass operation being actuated.

According to a second aspect of the present invention, there is provided a method of operating a refrigerant system having a scroll compressor, and an economizer cycle, along with a variable speed drive for said compressor, said method comprising: determining a desired load on said refrigerant system, and determining whether said economizer cycle should be engaged to meet said desired load; and varying a speed of said scroll compressor to meet said desired load, wherein said scroll compressor is further provided with an unloader function, wherein both said unloader and said economizer providing modes can be used to meet said desired load.

In a disclosed embodiment of this invention, a scroll compressor is provided in a refrigerant system with an economizer circuit. The scroll compressor has a motor that" is driven by a variable speed drive. By selectively utilizing the economizer circuit, and/or the optional unloader function the controller can increase or decrease the capacity of the refrigerant system. Further, by varying the speed of the motor, capacities in each mode of operation can be additionally adjusted to provide essentially continuous stepless control.

A controller identifies a desired capacity level, and then achieves this desired capacity level by first actuating the economizer cycle if increased capacity is desired, or not actuating the economizer cycle if extra capacity is not required, (or providing additional means of unloading to reduce the capacity even further) and then determining a desired motor speed for achieving the exact capacity level. Since the refrigerant compressor provides efficient and reliable operation only within a certain speed range, additional steps of capacity reduction, such as the unloader function, with or without the economizer circuit engaged, may be desired and similarly utilized with the corresponding compressor motor speed adjustment to precisely control the capacity level or achieve more efficient unit operation. In one simplified method, the variable speed is adjusted incrementally within a particular mode of operation (conventional, economized, unloaded, etc.), and the capacity provided is monitored. When the desired capacity is reached, then the system operates at that new speed. If the capacity still needs to be adjusted, then the speed is adjusted in another incremental step. Similarly, if capacity needs to be reduced, the optional unloaded mode of operation can be engaged either in conjunction with closed or open economizer line. Additionally, the controller may monitor the system efficiency level and select the most desirable mode of operation and motor speed. In this case, both capacity and efficiency considerations can be taken into account to establish the optimum unit operation. One more mode of unloaded operation can be added to the system operation, where both the economizer circuit and unloader are engaged simultaneously.

By providing the variable speed drive in combination with the capacity adjustment options mentioned above, the present invention allows an end user to exactly tailor the system capacity and/or efficiency or combination of these two parameters to a desired level. The method of operation described above would be especially suitable for a transportation refrigeration applications, such as for example container refrigeration units, tractor-trailer units or buses, where a wide operating range of capacity is desired, while at the same time a precise capacity level control is also needed to maintain the cargo or the cooled environment within a narrow temperature range. As also common in these refrigeration applications, an additional throttling device, often called suction modulation valve (SMV) is provided to further reduce the capacity to the level below the level that would be normally achievable through unloading mechanisms and reduction in motor speed. The application of the variable speed drive can diminish or even in certain instances eliminate the need for an additional SMV.

In other features, the scroll compressor is preferably provided with a single entry port into the compressor for injecting the refrigerant into the intermediate compression port, and wherein this single port is also utilized to route refrigerant to the suction line when the unloader function is actuated.

In a second embodiment, the scroll compressor is a two-stage compressor, with the intermediate port located between the two stages.

These and other features of the present invention can be best understood from the following specification and drawings, the following of which is a brief description.

### BRIEF DESCRIPTION OF THE DRAWINGS

Figure 1A shows a first embodiment refrigerant cycle.
Figure 1B shows a detail of the scroll compressor of Figure 1A.
Figure 2 shows another embodiment refrigerant cycle.
Figure 3A shows a graph of the capacity provided by the prior art.
Figure 3B shows a graph of the capacity provided by the prior art.
Figure 4A shows the capacity provided by the present invention.
Figure 4B shows the capacity provided by the present invention.
Figure 5 shows a more precise view of the actual capacity provided by the typical existing variable speed controls.

### DETAILED DESCRIPTION OF THE PREFERRED EMBODIMENT

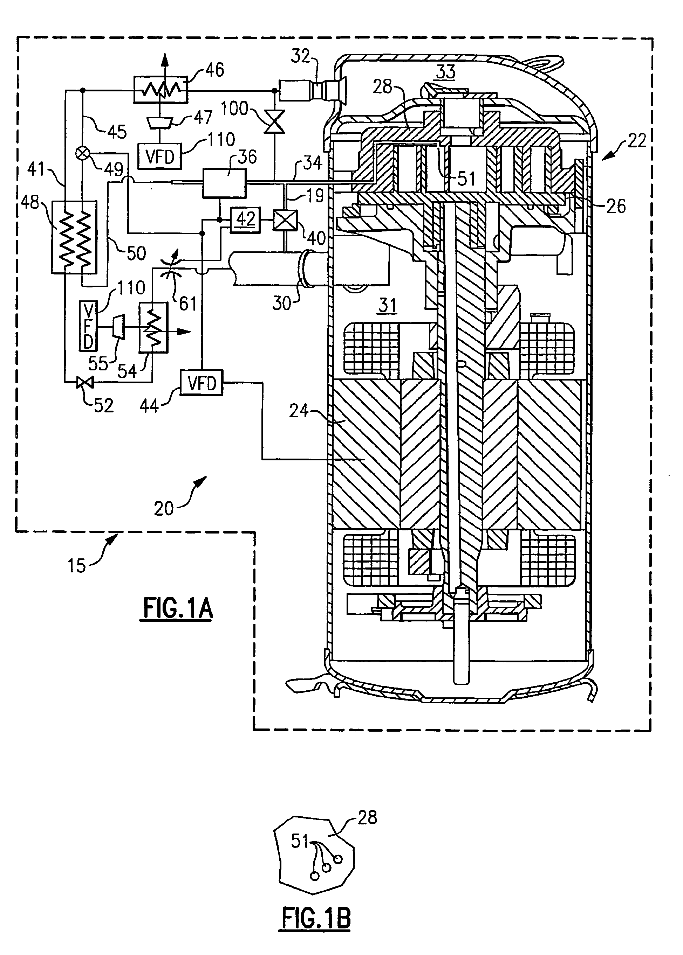

A refrigerant system 20 is illustrated in Figure 1A having a single stage compressor 22, a controller 42, a variable speed drive 44 and other components as illustrated in this Figure. As is known, a motor 24 for the compressor 22 can be driven at a variety of speeds such that the amount of refrigerant compressed by the compressor 22 can be varied. The compressor 22 is a scroll compressor having an orbiting scroll member 26 and a non-orbiting scroll member 28. As is known, a number of compression chambers are defined between the two scroll members to compress an entrapped refrigerant when the orbiting scroll member 26 is driven to orbit by the electric motor 24. As can be seen, a suction tube 30 leads refrigerant into a suction chamber 31 surrounding the motor and leading into the compression chambers. Once the refrigerant is compressed, it is driven into a discharge chamber 33 communicating with a discharge port 32. The structure of a scroll compressor is known. As also shown, an injection line 34, to be disclosed below, communicates with a port 51 that is positioned at an intermediate compression point. As shown in Figure 1B, the port 51 may actually be a plurality of ports such as is disclosed in United States Patent 5,996,364.

Refrigerant compressed by the compressor 22 is discharged from the discharge port 32, and then to an outdoor heat exchanger 46, which would be the condenser in a cooling mode. Fan 47 moves air over the heat exchanger 46. Downstream of the condenser 46 is an economizer heat exchanger 48. As is known, the economizer heat exchanger receives a tapped refrigerant line 45 passing through an economizer expansion device 49, and a main refrigerant line 41. Although the two flows are shown flowing in the same direction in Figure 1A, this is merely to simplify the illustration. In practice, it is generally preferred to have the two flows flowing in counter-flow arrangement.

The tapped refrigerant in the tap line 45 subcools the refrigerant in the main line 41, such that after passing through an expansion device 52, it will have a higher cooling potential prior to entering an evaporator 54. Fan 55 moves air over the evaporator 54. From the evaporator 54, the refrigerant returns to a suction line 30 leading back to the compressor 22. Variable or constant speed drives 110 are shown associated with fans 55 and 47, and can be utilized to vary the speed of these fans to achieve system control, as known. An optional suction modulation valve 61 can be positioned in the suction line 30 between the compressor 22 and evaporator 54. The tapped refrigerant from the tapped line 45 passes through the return injection line 34 to enter the intermediate compression point or injection port (or plurality of ports) 51 in the compressor 22. A bypass line 19 may selectively bypass refrigerant from the compressor 22 back to the suction line 30 when a bypass valve 40 is opened. It should be understood that the economizer expansion device 49 also preferably incorporates a shutoff feature, or a separate shutoff device 36 is provided. When the bypass valve 40 is opened, the shutoff device 36 is preferably closed, and when the shutoff device 36 is opened, the bypass valve 40 is typically closed; however, it is also possible to operate with both shutoff valve 36 and bypass valve 40 open. As shown, the same port of the injection line 34 can be used to deliver the refrigerant from the economizer heat exchanger as well as to bypass the refrigerant back to the suction line. Of course, if so desired the bypass and refrigerant injection functions can utilize different ports, instead of common point 51.

As is known, the bypass valve 40 is opened when less than the full capacity of the compressor 22 is desirable. Thus, partially compressed refrigerant is returned to the suction line 30, and the cooling capacity of the refrigerant system is reduced. If a capacity increase is desired, then the bypass valve 40 is closed. If even further capacity augmentation is desired, then the bypass valve 40 is closed and the economizer expansion device 49 and/or shut-off device 36 are opened to provide the economizer function. An enhanced capacity is then provided.

The outline 15 is illustrated in Figure 1A to make clear that the refrigerant system 20 may be incorporated into various items such as a refrigeration container, a refrigerated tractor-trailer unit, a bus air-conditioner, etc.

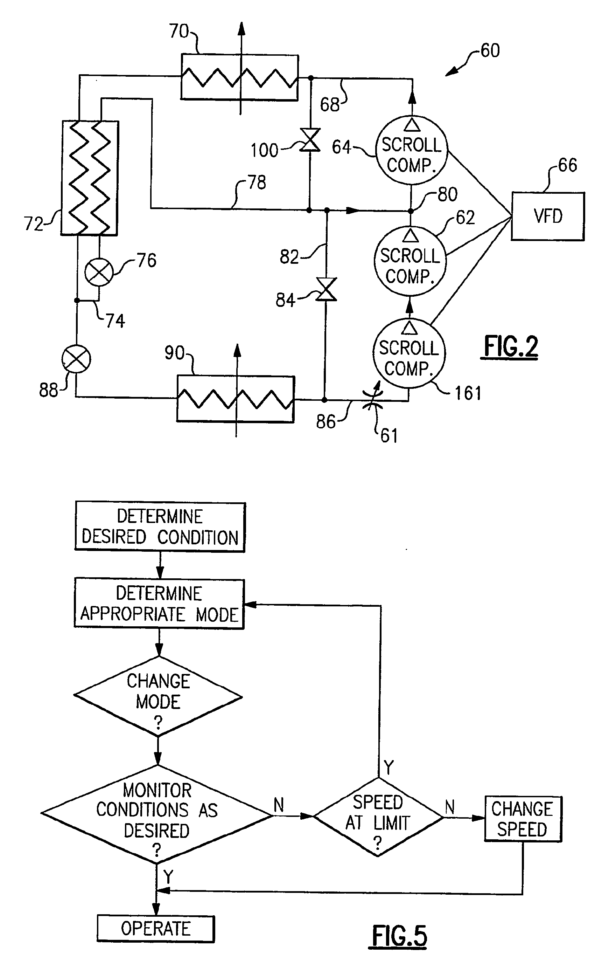

As shown in Figure 2, a refrigerant system 60 has two stages of compression 62 and 64. A variable speed drive 66 can vary the speed of the motors for either or both of the compressors 62 or 64. A third compressor stage 161 is illustrated and could also be controlled by a variable speed drive 66, as could a fourth, etc. A downstream discharge line 68 leads to a condenser 70, and to an economizer heat exchanger 72. A tap line 74 passes through an economizer expansion device 76, and back to a return intermediate pressure line 78. The return line 78 is shown entering at an intermediate point 80 between the two compression stages 62 and 64. If the expansion valve 76 is not electronically controlled, then an additional flow device (normally a solenoid valve) needs to be installed to selectively engage and disengage the economizer circuit. The bypass line 82 passes through a bypass valve 84 back to a suction line 86. Downstream of the economizer heat exchanger 72, the main refrigerant flow passes through a main expansion device 88, and an evaporator 90 before passing back to the suction line 86. The compressor stages 62 and 64 are both provided by scroll compressors.

An additional, or alternate bypass valve 100 may communicate the discharge line 68 back to the intermediate line 78. This would allow further control of unloaded or bypass operation. Further, while two stages of compression 62 and 64 are possible, it would be within the scope of this invention to provide additional stages.

Again, a suction modulation valve 61 is placed downstream of the evaporator 55 to provide additional throttle into the suction flow in this embodiment as well.

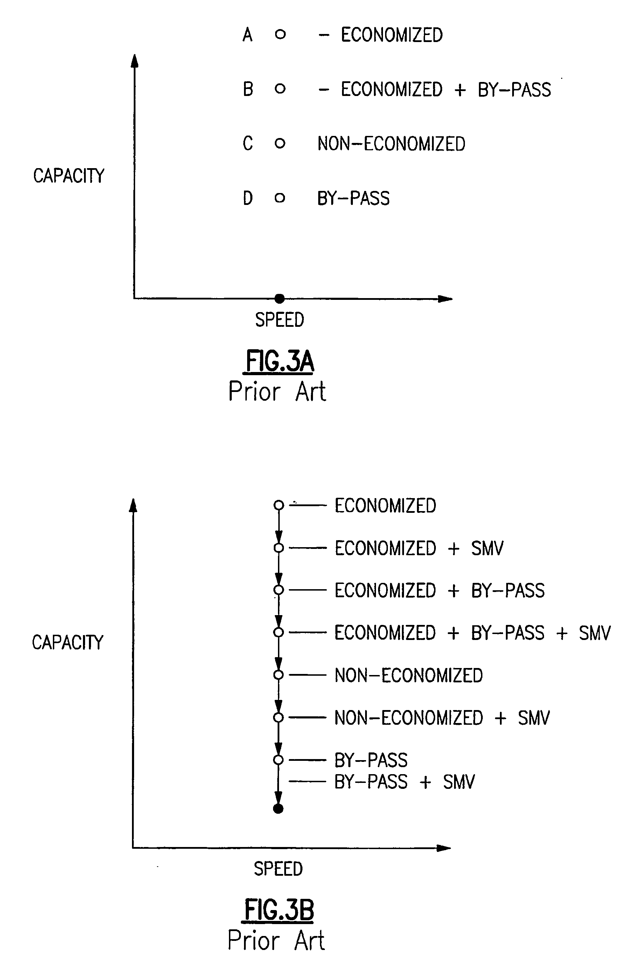

A control for either refrigerant cycle 20 and 60 is able to identify a desired cooling capacity, and operate the bypass function and/or the economizer function as necessary. Thus, as shown in Figure 3A, the prior art system provides varying stages A, B, C, D of capacity. Stage A corresponds to operation in economized mode, stage B corresponds to operation in economized and bypass modes engaged at the same time, stage C corresponds to non-economized mode, and stage D corresponds to bypass mode of operation. If there is an additional SMV, then, as shown in Figure 3B, by throttling the SMV between the modes of operation mentioned above the capacity can be adjusted between these modes. However, the SMV operation is inefficient, and in general should be avoided if possible.

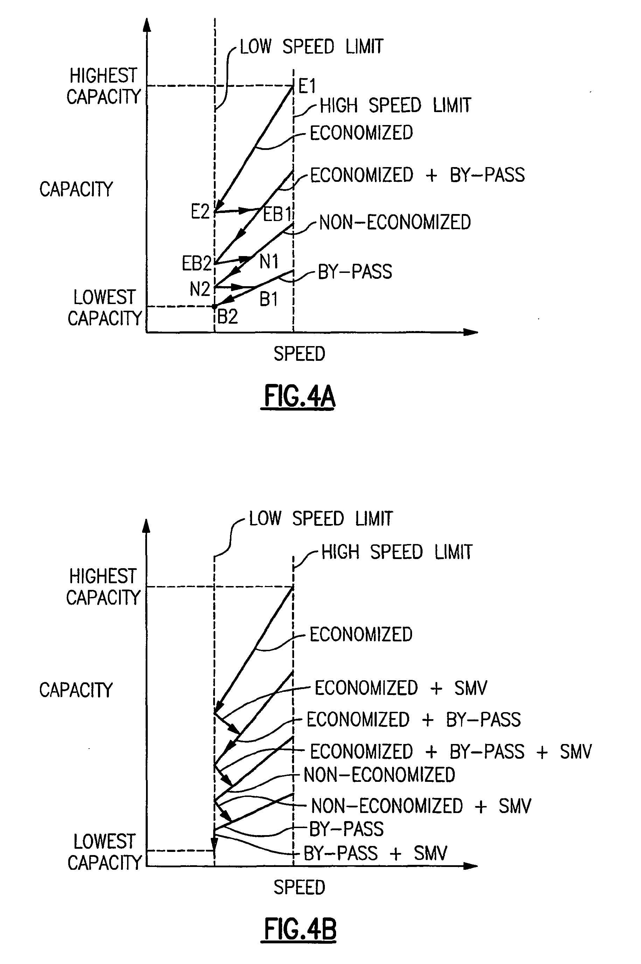

When the systems of Figure 1A and Figure 2 include a variable speed drive for their compressor motors then there can be a stepless capacity control between the base values A, B, C, D, with or without the use of SMV. Thus, as shown in Figure 4A, if the system was operating at maximum capacity at point E1 (which would normally correspond to economized circuit engaged and the compressor running at maximum speed) by reducing the speed of the compressor the capacity can be reduced to point E2. If further reduction is desired the compressor speed is adjusted and the switch is made to economized mode with bypass engaged. Further, the system capacity can be adjusted by varying the compressor speed along the line connecting points EB1 and EB2. If further capacity reduction is desired, the speed can be adjusted once again and the system will move to the next mode of operation, which would be a non-economized mode. Now, the system capacity can be adjusted by varying the compressor speed along the line connecting points N1 and N2. If even further reduction in capacity is desired, the speed can be changed once again and the system will move to the next operating mode, which would be a bypass mode. Now, the system capacity can be adjusted by varying the compressor speed along the line connecting points B1 and B2. System operation shown in Figure 4B is similar to operation in Figure 4A, except that abrupt changes in speed are avoided by engaging SMV shortly before the change in mode of operation. Also, even though four major modes of operation are shown in Figures 3A, 3B, 4A, and 4B, the actual number of modes can be reduced. For example, the system can be operated only in a single economized mode, and the capacity in this mode can be varied by engaging a variable speed drive. As another example, it would be possible not to implement an economized/bypass mode of operation. An extension of operational modes can be achieved by selectively opening and closing the optional valve 100 that can be positioned between the discharge and intermediate compression lines in Figure 1A and Figure 2 arrangements. It should be pointed out that additional modes of operation are possible for controlling capacity of the two-stage compressor arrangement where each or both of these compressor stages can be driven by a variable speed drive. It also should be noted that what is shown in the Figures 4A and 4B is only an illustration on how the switch between the modes is made, the decision on when to make the switch, how to adjust the speed and how to engage the SMV would depend on a specific operating condition, load characteristics, efficiency and power considerations. As an additional improvement to the system operation, either the condenser fan or the evaporator fan (or both) can be provided with a variable speed drive.

While varying the speed of the compressors provides desirable benefit, there are upper and lower limits imposed on the actual operating compressor speed range that would be available to the end user. Typically, a lower limit is defined by reliability requirements to maintain adequate lubrication of compressor components such as bearings and compression elements. On the other hand, an upper limit is determined by undesirably high power consumption or excessive noise and resultant inefficient operation as well as safety considerations. These limits can be utilized at the system design stage to define times when it would be desirable to switch between modes of operation. The upper and lower speed limits may vary from one application to the other and be condition dependant during the system operation.

Figure 5 shows how the ramps would typically be achieved. As shown in Figure 5, once a particular mode of operation is selected, the speed can be varied within that mode and within the speed limits mentioned above. This iterative change is how variable speed drives work in the prior art. If change beyond the speed limits is needed, then the system switches to a different mode of operation.

In further aspects, it is known to make the economizer and unloader functions continuously adjustable. Still, providing a variable speed drive for the compressor will allow even more flexible, reliable and efficient operation to be achieved.

Although preferred embodiments of this invention have been disclosed, a worker of ordinary skill in this art would recognize that certain modifications would come within the scope of this invention. For that reason, the following claims should be studied to determine the true scope and content of this invention.

## Claims

1. A refrigerant system (20;60) comprising:
at least one scroll compressor (22;62,64,161) having a variable speed drive (44;66) for varying a speed of said scroll compressor, and said scroll compressor being provided with a suction port (30), an intermediate pressure port (51) and discharge port (32);
a condenser (46;70) downstream of said scroll compressor and an evaporator (54;90) downstream of said condenser, with an economizer heat exchanger (48;72) intermediate to said condenser and said evaporator, said economizer heat exchanger selectively returning a tapped refrigerant (45;74) to said scroll compressor;
at least one condenser fan (47) for moving air across said condenser and at least one evaporator fan (55) for moving air across said evaporator;
a bypass port (51;80) configured to selectively bypass refrigerant from said scroll compressor back to a suction line (30;86) for said scroll compressor; and
a control (42) configured to selectively operate said economizer heat exchanger to deliver a tapped refrigerant through said economizer heat exchanger, and back to said compressor, and said control also being operable to vary said speed of said scroll compressor to achieve levels of capacity between a level of capacity with said economizer heat exchanger being operational, and a level of capacity without said economizer heat exchanger being operational, and to provide levels of capacity between a level of capacity provided when said bypass operation is actuated, and without said bypass operation being actuated.

2. The refrigerant system as set forth in claim 1, wherein said bypass port (51;80) and said intermediate pressure port (51) are provided by the same port.

3. The refrigerant system as set forth in claim 1, wherein the delivery of said bypass refrigerant is controlled by a flow control device (40;84,100).

4. The refrigerant system as set forth in claim 1, wherein said scroll compressor (22; 161) is a single stage compressor, and said intermediate pressure port (51) within said scroll compressor also communicates with said bypass port.

5. The refrigerant system as set forth in claim 1, wherein said scroll compressor (62,64) has at least two scroll compressor stages (62,64), and said intermediate pressure port (80) is between two of said stages.

6. The refrigerant system as set forth in claim 1, wherein said control (42) is configured to change said speed of said scroll compressor (22;62,64,161) in incremental steps.

7. The refrigerant system as set forth in claim 1, wherein said bypass port selectively communicates an intermediate pressure line (19;78) receiving said tapped refrigerant back to a suction line (30;86) leading to said compressor.

8. The refrigerant system as set forth in claim 1, wherein said bypass is between a discharge line (19,82) for compressed refrigerant, and back to the suction line (30;86).

9. The refrigerant system as set forth in claim 1, wherein said tapped refrigerant (45;74) is returned to said intermediate compression port (51;80).

10. The refrigerant system as set forth in claim 1, wherein the delivery of said tapped refrigerant (45;74) is controlled by a flow control device (40;84,100).

11. The refrigerant system as set forth in claim 1, wherein said system is part of a refrigeration transportation unit.

12. The refrigerant system as set forth in claim 11, wherein said refrigeration transportation unit is a refrigeration container unit.

13. The refrigerant system as set forth in claim 11, wherein said refrigeration transportation unit is a tractor/trailer unit.

14. The refrigerant system as set forth in claim 1, wherein the at least one said evaporator fan (55) has a variable speed drive (110) for varying a speed of said fan.

15. The refrigerant system as set forth in claim 1, wherein the at least one said condenser fan (47) has a variable speed drive (110) for varying a speed of said fan.

16. The refrigerant system as set forth in claim 1, wherein there is a suction modulation valve (61) located downstream of said evaporator (54;90).

17. The refrigerant system as set forth in claim 1, wherein said scroll compressor (22; 161) is a single stage compressor.

18. The refrigerant system as set forth in claim 1, wherein said scroll compressor (62,64) has at least two stages (62,64).

19. The refrigerant system as set forth in claim 5, wherein there are more than two scroll compressor stages, with said intermediate pressure port (80) being between two of said stages (62,64).

20. The refrigerant system as set forth in claim 5, wherein a variable speed drive (66) controls both of said two scroll compressor stages (62,64).

21. The refrigerant system as set forth in claim 5, wherein at least one of said two scroll compressor stages does not have a variable speed drive.

22. A method of operating a refrigerant system (20;60) having a scroll compressor (22;62,64,161), and an economizer cycle, along with a variable speed drive (44;66) for said compressor, said method comprising:
determining a desired load on said refrigerant system, and determining whether said economizer cycle should be engaged to meet said desired load; and varying a speed of said scroll compressor to meet said desired load,
wherein said scroll compressor is further provided with an unloader function,
and wherein both said unloader and said economizer providing modes can be used to meet said desired load.

23. The method as set forth in claim 22, wherein said speed of said scroll compressor (22;62,64,161) is varied in incremental steps.

24. The method as set forth in claim 22, wherein a suction modulation valve (61) is also provided, and is actuated to vary the operational function of the refrigerant system to meet said desired load.

## Patentansprüche

1. Kältemittelsystem (20; 60), umfassend:
wenigstens einen Spiralverdichter (22; 62, 64, 161) mit verstellbarem Drehzahlantrieb (44; 66) zum Variieren einer Drehzahl des Spiralverdichters, wobei der Spiralverdichter mit einem Ansauganschluss (30), einem Zwischendruckanschluss (51) und einem Auslaufanschluss (32) versehen ist;
einen Kondensator (46; 70) stromabwärts vom Spiralverdichter und einem Verdampfer (54; 90) stromabwärts vom Kondensator, mit einem Economizer-Wärmetauscher (48; 72) zwischen dem Kondensator und dem Verdampfer, wobei der Economizer-Wärmetauscher selektiv ein abgezapftes Kältemittel (45; 74) an den Spiralverdichter zurückleitet;
wenigstens ein Kondensatorgebläse (47) zum Bewegen von Luft über den Kondensator und wenigstens ein Verdampfergebläse (55) zum Bewegen von Luft über den Verdampfer;
einen Umleitungsanschluss (51; 80), der dazu konfiguriert ist, selektiv Kältemittel vom Spiralverdichter zurück an eine Ansaugleitung (30; 86) für den Spiralverdichter umzuleiten; und
eine Steuereinrichtung (42), die dazu konfiguriert ist, den Economizer-Wärmetauscher selektiv zu betätigen, um ein abgezweigtes Kältemittel durch den Economizer-Wärmetauscher und zurück an den Verdichter zu leiten, wobei die Steuereinrichtung betriebsfähig ist, um die Drehzahl des Spiralverdichters zu variieren, um Kapazitätsstufen zwischen einer Kapazitätsstufe, die bereitgestellt wird, wenn der Umleitungsbetrieb aktiviert wird, und ohne dass der Umleitungsbetrieb aktiviert wird, bereitzustellen.

2. Kältemittelsystem nach Anspruch 1, wobei der Umleitungsanschluss (51; 80) und der Zwischendruckanschluss (51) durch denselben Anschluss bereitgestellt werden.

3. Kältemittelsystem nach Anspruch 1, wobei das Zuleiten des Umleitungskältemittels durch eine Durchflusssteuervorrichtung (40; 84, 100) gesteuert wird.

4. Kältemittelsystem nach Anspruch 1, wobei der Spiralverdichter (22; 161) ein Einstufenverdichter ist und der Zwischendruckanschluss (51) im Spiralverdichter auch mit dem Umleitungsanschluss in Verbindung steht.

5. Kältemittelsystem nach Anspruch 1, wobei der Spiralverdichter (62, 64) wenigstens zwei Spiralverdichterstufen (62, 64) aufweist und der Kältemittelsystem nach Anspruch 1, wobei der Spiralverdichter (80) zwischen zwei der Stufen liegt.

6. Kältemittelsystem nach Anspruch 1, wobei die Steuereinrichtung (42) dazu konfiguriert ist, die Drehzahl des Spiralverdichters (22; 62, 64, 161) in inkrementellen Schritten zu ändern.

7. Kältemittelsystem nach Anspruch 1, wobei der Umleitungsanschluss selektiv eine Verbindung von einer Zwischendruckleitung (19; 78), die das abgezweigte Kältemittel aufnimmt, zurück zu einer Ansaugleitung (30; 86) herstellt, die zum Verdichter führt.

8. Kältemittelsystem nach Anspruch 1, wobei die Umleitung zwischen einer Auslaufleitung (19, 82) für verdichtetes Kältemittel und zurück zur Ansaugleitung (30; 86) erfolgt.

9. Kältemittelsystem nach Anspruch 1, wobei das abgezweigte Kältemittel (45; 74) zum Zwischendruckanschluss (51; 80) zurückgeführt wird.

10. Kältemittelsystem nach Anspruch 1, wobei das Zuleiten des abgezweigten Kältemittels (45; 74) von einer Durchflusssteuervorrichtung (40; 84, 100) gesteuert wird.

11. Kältemittelsystem nach Anspruch 1, wobei das System Teil einer Kühltransporteinheit ist.

12. Kältemittelsystem nach Anspruch 11, wobei die Kühltransporteinheit eine Kühlbehältereinheit ist.

13. Kältemittelsystem nach Anspruch 11, wobei die Kühltransporteinheit eine Zugfahrzeug/Anhänger-Einheit ist.

14. Kältemittelsystem nach Anspruch 1, wobei das wenigstens eine Verdampfergebläse (55) einen Antrieb mit variabler Drehzahl (110) zum Variieren der Drehzahl des Gebläses aufweist.

15. Kältemittelsystem nach Anspruch 1, wobei das wenigstens eine Kondensatorgebläse (47) einen Antrieb mit variabler Drehzahl (110) zum Variieren der Drehzahl des Gebläses aufweist.

16. Kältemittelsystem nach Anspruch 1, wobei ein Ansaugmodulationsventil (61) stromabwärts vom Verdampfer (54; 90) angeordnet ist.

17. Kältemittelsystem nach Anspruch 1, wobei der Spiralverdichter (22; 161) ein Einstufenverdichter ist.

18. Kältemittelsystem nach Anspruch 1, wobei der Spiralverdichter (62, 64) wenigstens zwei Stufen (62, 64) aufweist.

19. Kältemittelsystem nach Anspruch 5, wobei mehr als zwei Verdichterstufen vorliegen, wobei der Zwischendruckanschluss (80) zwischen zwei der Stufen (62, 64) liegt.

20. Kältemittelsystem nach Anspruch 5, wobei ein Antrieb mit variabler Drehzahl (66) die beiden Spiralverdichterstufen (62, 64) steuert.

21. Kältemittelsystem nach Anspruch 5, wobei wenigstens eine der zwei Spiralverdichterstufen keinen Antrieb mit variabler Drehzahl aufweist.

22. Verfahren zum Betreiben eines Kältemittelsystems (20; 60) mit einem Spiralverdichter (22; 62, 64, 161),und einem Economizer-Kreislauf, zusammen mit einem Antrieb mit variabler Drehzahl (44; 66) für den Verdichter, wobei das Verfahren Folgendes umfasst:
Bestimmen einer gewünschten Last des Kältemittelsystems, und Bestimmen, ob der Economizer-Kreislauf aktiviert werden sollte, um die gewünschte Last zu ermöglichen; und Variieren einer Drehzahl des Spiralverdichters, um die gewünschte Last zu ermöglichen,
wobei der Spiralverdichter ferner mit einer Entlastungsfunktion versehen ist,
und wobei sowohl der Entlaster als auch der Economizer Modi bereitstellen, die dazu benutzt werden können, die gewünschte Last zu ermöglichen.

23. Verfahren nach Anspruch 22, wobei die Drehzahl des Spiralverdichters (22; 62, 64, 161) in inkrementellen Schritten variiert wird.

24. Verfahren nach Anspruch 22, wobei auch ein Ansaugmodulationsventil (61) vorgesehen ist und betätigt wird, um die Betriebsfunktion des Kältemittelsystems zu variieren, um die gewünschte Last zu ermöglichen.

## Revendications

1. Système réfrigérant (20, 60) comprenant :
au moins un compresseur à spirale (22, 62, 64, 161) comportant un entraînement à vitesse variable (44, 66) permettant de faire varier une vitesse dudit compresseur à spirale, et ledit compresseur à spirale étant doté d'un orifice d'aspiration (30), d'un orifice de pression intermédiaire (51) et d'un orifice d'évacuation (32) ;
un condenseur (46, 70) situé en aval dudit compresseur à spirale et un évaporateur (54, 90) situé en aval dudit condenseur, avec un échangeur de chaleur à économiseur (48, 72) intermédiaire entre ledit condenseur et ledit évaporateur, ledit échangeur de chaleur à économiseur renvoyant de manière sélective un réfrigérant (45, 74) prélevé au robinet audit compresseur à spirale ;
au moins un ventilateur de condenseur (47) permettant de déplacer l'air à travers ledit compresseur, et au moins un ventilateur d'évaporateur (55) permettant de déplacer de l'air à travers ledit évaporateur ;
un orifice de dérivation (51, 80) configuré pour dériver de manière sélective le réfrigérant à partir dudit compresseur à spirale jusqu'à une conduite d'aspiration (30, 86) destinée audit compresseur à spirale ; et
une commande (42) configurée pour actionner de manière sélective ledit échangeur de chaleur à économiseur pour conduire un réfrigérant prélevé au robinet à travers ledit échangeur de chaleur à économiseur, et de retour vers ledit compresseur, et ladite commande pouvant être aussi actionnée pour faire varier ladite vitesse dudit compresseur à spirale en vue d'atteindre des niveaux de capacité situés entre un niveau de capacité avec ledit échangeur de chaleur à économiseur opérationnel, et un niveau de capacité sans que ledit échangeur de chaleur à économiseur ne soit opérationnel, et pour obtenir des niveaux de capacité situés entre un certain niveau de capacité obtenu quand ladite opération de dérivation est actionnée, et sans que ladite opération de dérivation ne soit actionnée.

2. Système réfrigérant selon la revendication 1, dans lequel ledit orifice de dérivation (51, 80) et ledit orifice de pression intermédiaire (51) sont constitués du même orifice.

3. Système réfrigérant selon la revendication 1, dans lequel l'apport dudit réfrigérant de dérivation est régulé par un dispositif (40, 84, 100) de régulation de débit.

4. Système réfrigérant selon la revendication 1, dans lequel ledit compresseur à spirale (22, 161) est un compresseur à un seul étage, et où ledit orifice de pression intermédiaire (51) situé au sein dudit compresseur à spirale communique aussi avec ledit orifice de dérivation.

5. Système réfrigérant selon la revendication 1, dans lequel ledit compresseur à spirale (62, 64) contient au moins deux étages (62, 64) de compresseur à spirale, et où ledit orifice de pression intermédiaire (80) se trouve entre deux desdits étages.

6. Système réfrigérant selon la revendication 1, dans lequel ladite commande (42) est configurée pour modifier ladite vitesse dudit compresseur à spirale (22, 62, 64, 161) par étapes en incréments.

7. Système réfrigérant selon la revendication 1, dans lequel ledit orifice de dérivation communique de manière choisie avec une conduite (19, 78) à pression intermédiaire recevant ledit réfrigérant prélevé au robinet de retour jusqu'à une conduite d'aspiration (30, 86) conduisant audit compresseur.

8. Système réfrigérant selon la revendication 1, dans lequel ledit dérivation se trouve entre une conduite d'évacuation (19, 82) destinée au réfrigérant comprimé et de retour vers la conduite d'aspiration (30, 86).

9. Système réfrigérant selon la revendication 1, dans lequel ledit réfrigérant (45, 74) prélevé au robinet est reconduit audit orifice de pression intermédiaire (51, 80).

10. Système réfrigérant selon la revendication 1, dans lequel l'apport dudit réfrigérant (45, 74) prélevé au robinet est régulé par un dispositif (40, 84, 100) de régulation de débit.

11. Système réfrigérant selon la revendication 1, dans lequel ledit système fait partie d'une unité de transport de réfrigération.

12. Système réfrigérant selon la revendication 11, dans lequel ladite unité de transport de réfrigération est une unité à conteneurs de réfrigération.

13. Système réfrigérant selon la revendication 11, dans lequel ladite unité de transport de réfrigération est une unité à tracteur/remorque.

14. Système réfrigérant selon la revendication 1, dans lequel ledit au moins un ventilateur d'évaporateur (55) comporte un entraînement à vitesse variable (110) permettant de faire varier une vitesse dudit ventilateur.

15. Système réfrigérant selon la revendication 1, dans lequel ledit au moins un ventilateur de condenseur (47) comporte un entraînement à vitesse variable (110) permettant de faire varier une vitesse dudit ventilateur.

16. Système réfrigérant selon la revendication 1, dans lequel il existe une soupape (61) de modulation de l'aspiration située en aval dudit évaporateur (54, 90).

17. Système réfrigérant selon la revendication 1, dans lequel ledit compresseur à spirale (22, 161) est un compresseur à un seul étage.

18. Système réfrigérant selon la revendication 1, dans lequel ledit compresseur à spirale (62, 64) compte au moins deux étages (62, 64).

19. Système réfrigérant selon la revendication 5, dans lequel il existe plus de deux étages de compresseur à spirale, ledit orifice de pression intermédiaire (80) se trouvant entre deux desdits étages (62, 64).

20. Système réfrigérant selon la revendication 5, dans lequel un entraînement à vitesse variable (66) régule les deux étages (62, 64) du compresseur à spirale.

21. Système réfrigérant selon la revendication 5, dans lequel au moins un desdits deux étages du compresseur à spirale ne comporte pas de commande à vitesse variable.

22. Procédé d'actionnement d'un système réfrigérant (20, 60) comportant un compresseur à spirale (22, 62, 64, 161) et un cycle d'économiseur, ainsi qu'un entraînement à vitesse variable (44, 66) destiné audit compresseur, ledit procédé comprenant les étapes suivantes :
déterminer une charge voulue sur ledit système à réfrigérant, et déterminer si ledit cycle d'économiseur doit être mis en service pour atteindre ladite charge voulue ; et faire varier une vitesse dudit compresseur à spirale pour atteindre ladite charge voulue,
dans lequel ledit compresseur à spirale est en outre doté d'une fonction de déchargeur,
et où les deux modes mettant en service ledit déchargeur et ledit économiseur peuvent être employés pour atteindre ladite charge voulue.

23. Procédé selon la revendication 22, dans lequel ladite vitesse dudit compresseur à spirale (22, 62, 64, 161) varie par étapes en incréments.

24. Procédé selon la revendication 22, dans lequel une soupape (61) de modulation d'aspiration est également prévue, et est actionnée pour faire varier la fonction opérationnelle du système réfrigérant en vue d'atteindre ladite charge voulue.
